# EUROPEAN PATENT APPLICATION

(11) **EP 4 786 386 A1**
(43) Date of publication of application: **05.08.2026**
(21) Application number: 25206816.8
(22) Date of filing: 06.10.2025
(51) Int. Cl.: B65H 1/06, B65H 1/24, B65H 1/30

(54) **CARD SUPPLY MECHANISM, METHOD OF MAKING A CARD HOPPER, AND METHOD OF USING A CARD HOPPER**

(30) Priority: 07.10.2024 US 202418907855
(71) Applicant: ASSA ABLOY AB, 107 23 Stockholm (SE)
(72) Inventor: Beery, Chad Everett, Waconia 55387 (US)
(74) Representative: DTS Patent- und Rechtsanwälte PartmbB

(57) **Abstract**

Systems, devices, methods, and machine-readable media configured to dispense cards for card printing are provided. A card hopper can include a base, sidewalls extending from the base, the sidewalls configured to hold a stack of cards therebetween, a card lifter assembly including a ramp, the card lifter assembly mechanically coupled to the base, a lifter mechanism situated on the ramp, the lifter mechanism including a card retainer, the card retainer configured to transfer weight of cards of a stack of cards to the lifter mechanism, and a gate located in a sidewall of the sidewalls, the gate configured to allow a bottom most card of the stack of cards to pass therethrough when pushed by the card lifter assembly.

## Description

### BACKGROUND

Many card supply mechanisms (sometimes called hoppers) are used for card printing. The hoppers feed cards into a card printing machine. The hoppers are designed to hold cards in a vertical stack configuration. Most of the hoppers pull the card, to be sent into the card printing machine, from the bottom.

### BRIEF DESCRIPTION OF THE DRAWINGS

FIG. 1 illustrates, by way of example, a high-level diagram of an embodiment of a card printing system.
FIG. 2 illustrates, by way of example, a cutaway diagram of an embodiment of an improved card hopper.
FIG. 3 illustrates, by way of example, a perspective view diagram that illustrates the lifting mechanism, the card lifter assembly, and the cards with a housing of the improved hopper removed.
FIG. 4 illustrates, by way of example, a cross-section view diagram of the improved hopper.
FIG. 5 illustrates, by way of example, a perspective view diagram of an embodiment of the improved hopper.
FIG. 6 illustrates, by way of example, a flow diagram of an embodiment of a method of manufacturing the improved hopper.
FIG. 7 illustrates, by way of example, a diagram of an embodiment of a method of using an improved hopper.
FIG. 8 is a block schematic diagram of a computer system to perform voice inference, and for performing methods and algorithms according to example embodiments.

### DETAILED DESCRIPTION

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized, and that structural, logical and electrical changes may be made without departing from the scope of the present invention. The following description of example embodiments is, therefore, not to be taken in a limited sense, and the scope of the present invention is defined by the appended claims.

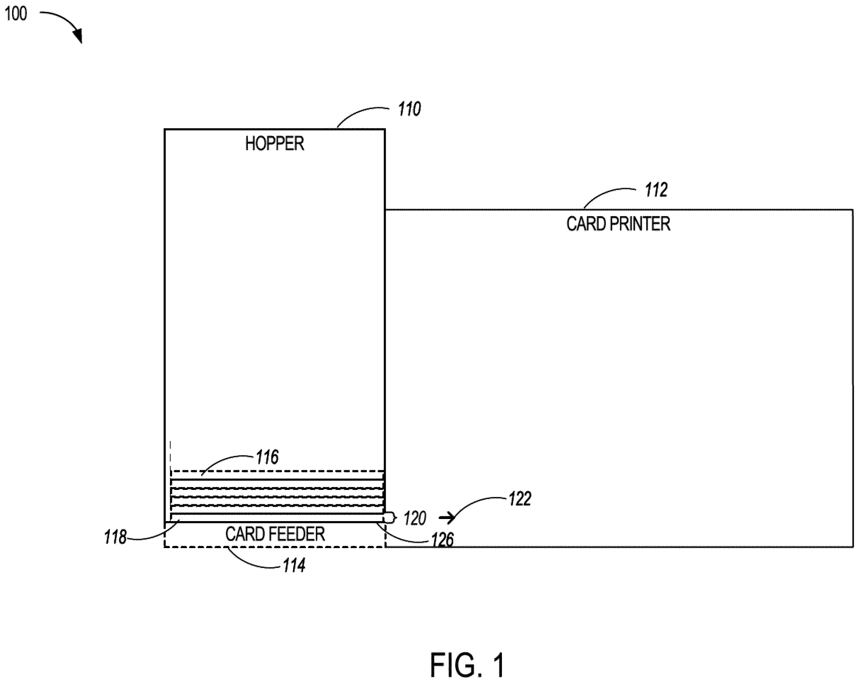

FIG. 1 illustrates, by way of example, a high-level diagram of an embodiment of a card printing system 100. The card printing system 100 as illustrated includes a hopper 110 and a card printer 112. The hopper 110 holds a stack of cards 116, 118 in a consistent orientation. The dimensions of the hopper 110 are such that the cards 116, 118 are forced to stack on top of each in a same, consistent orientation.

A card feeder 114 moves the bottom card 118 into the card printer 112. The card feeder 114 typically includes a motor, camming device, a pusher mechanism, a combination thereof, or the like. The card feeder 114 produces enough force to push the bottom card 118 through a gate 120, in a direction indicated by arrow 122. The card printer 112 receives the bottom card 118 and prints, like an inkjet printer, onto the card. The card printer 112 then ejects a printed card through an output port. The output port and inner workings of the card printer 112 are not illustrated.

As more and more cards are placed on the stack of cards, 116, 118 in the hopper 110, the overall weight on the bottom card 118 increases. The weight on the bottom card 118 creates at least two issues. First, the motor torque (of a motor of the card feeder 114) required to push out the bottom card 118 goes up. Second, the sliding friction of the bottom card 118 increases, resulting in an increased chance of the bottom card 118 getting scratched from a bottom card 118 to other card interaction as well as the bottom card 118 to hopper 110 base 126 interaction. Further, cards with certain types of coatings (e.g., polyester) tend to stick to cards of the same material and are not only difficult to slide apart but also tend to scratch more, due to the sharp edges of the cards.

To reduce card scratching and to reduce cards from sticking to one another or other general feeding issues, fewer cards are typically put into the hopper 110. With fewer cards in the hopper 110, the cards in the hopper 110 need to be replaced more often. Often times, the hopper 110 will be out of cards before they are replenished, thus reducing card printer 112 throughput.

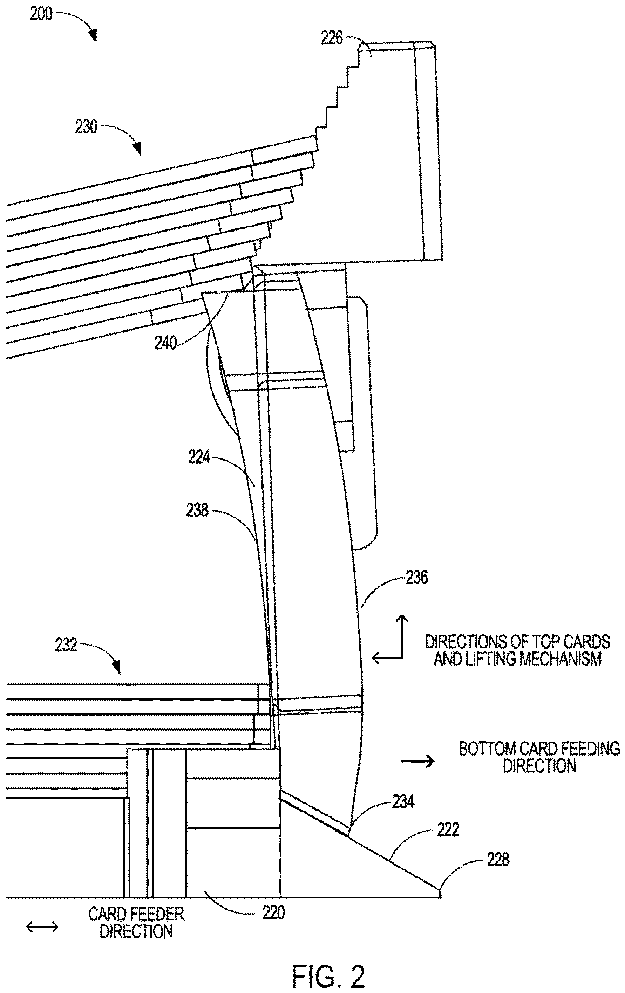

An improved card hopper of the remaining FIGS. reduces or eliminates scratches on a card 118 that can occur from card to card interactions. The card to card interactions occur as the bottom card 118 in the hopper slides out of a card supply output gate 120. The improved card hopper also reduces the force required to push a card out of a hopper, thus resulting in a reduced motor power requirement, reduced motor cost, and a hopper that can handle a greater amount of cards without scratching the bottom card. FIG. 2 illustrates a portion of an improved card hopper 200.

FIG. 2 illustrates, by way of example, a cutaway diagram of an embodiment of the improved card hopper 200. The cutaway view provides a view of the improved card hopper 200 that exposes a lifting mechanism 224 and other portions of the hopper 200 that are normally occluded by an external wall of the hopper 200. The improved card hopper 200 as illustrated includes an improved card lifter assembly 220, a lifting mechanism 224, and a card retainer 226.

The lifter assembly 220 includes a ramp 222. The ramp 222 can be situated on an end of the lifter assembly 220 closest to the printer 112. The ramp 222 can be situated on a same side of the hopper 200 as the gate (occluded in the view of FIG. 2) through which cards are fed into the printer 112. The ramp 222 as illustrated includes a triangular profile.

The lifter assembly 220 can be pushed, by a motor, cam assembly, or other component of the card feeder 114, towards the printer 112 (in the direction indicated as "bottom card feeding direction"). As the lifter assembly 220 is pushed towards the printer 112, the lifting mechanism 224 is forced to ascend the ramp 222 from about an end 228 of the ramp 222 to its illustrated position. The lifting mechanism 224 pushes the retainer 226 and in turn a portion of the cards 230 (sometimes called the "top cards") up and towards a back of the hopper 200. The back of the hopper 200 is not illustrated, but is the side of the hopper 200 opposite the end 228.

The lifting mechanism 224 lifts the top cards 230. In lifting the top cards 230, the lifting mechanism causes one or more of the top cards 230 to drop onto a stack of bottom cards 232. The lifting mechanism 224 as illustrated includes curved sides 236, 238. The curved sides 236, 238 include a non-zero and less than infinite radius of curvature. The curved sides 236, 238 are concave from the perspective of the back of the hopper 200.

The lifting mechanism 224 includes a first end 240 and a second end 234. The first end 240 of the lifting mechanism 224 opposes the second end 234. The second end 234 can be angled to match an angle of the ramp 222. The first end 240 can be substantially parallel to a base of the hopper 200 or substantially parallel to a major surface of the bottom cards 232. Substantially in this context means within about 5% in terms of angle from perfectly horizontal.

As the lifting mechanism 224 lifts the cards 230, the cards 230 are lifted rotationally. As the lifting mechanism 224 is then lowered, by way of the ramp 222 moving away from the bottom card feeding direction and the lifting mechanism 224 sliding down the ramp 222 towards the end 228, the top cards 230 rest against a card retainer 226.

The card retainer 226 includes a profile on which the cards 230 can rest. The profile as illustrated is a stepped profile that extends further inside the hopper 200 closer to the base of the hopper and extends less into the inside of the hopper 200 further away from the base of the hopper 200. While the profile in the example of FIG. 2 is stepped, other profiles are possible, such as a smooth curve, retaining features (e.g., bumps, divots, detents, a combination thereof, or the like), or a combination thereof.

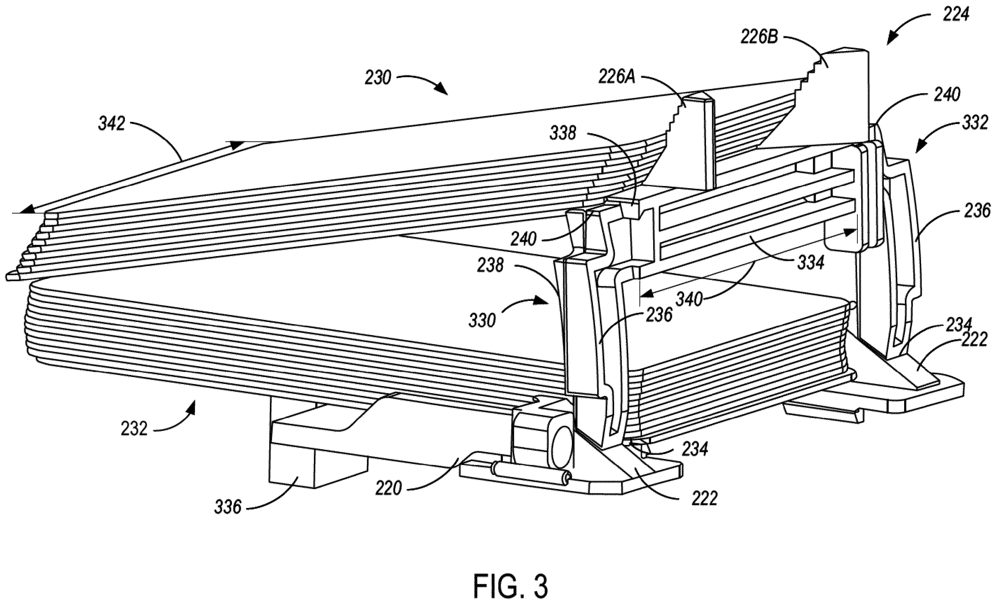

The lifting mechanism 224 can move on an axis of curvature. The lifting mechanism 224 is not electrically powered and relies on the card lifter assembly 220 to provide the lift to the lifting mechanism 224, causing the cards 230 to lift. The lifting mechanism 224 pushes horizontally on the ramp 222 of the card lifter assembly 220 when the card pusher assembly 336 (see FIG. 3) is pushing the bottom card into the printer 112. The card lifter assembly 220 causes the lifting mechanism 224 to lift by way of the lifting mechanism 224 sliding on the ramp 222.

When the card pusher assembly 336 moves to dispense a card into the printer 112, the lifting mechanism 224 lifts the top stack of cards 230. The lifting can be by an edge of the cards 230 most proximate the lifting mechanism 224 (the edge of the cards 230 closest to the gate) and in a vertical direction. The lifting, because the cards 230 are pressing on the cards 232 on an end of the cards 230 that is not illustrated, is curved and also moves the lifted cards 230 horizontally. The card retainer 226 upon which an edge of the cards 230 rest can be stepped or serrated. This step or serration assists the cards 230 in stepping downward as the cards 230 are pushed horizontally, thus assuring the cards 230 continue to move downward as the bottom cards 232 are ejected from the hopper 200.

The lift mechanism 224 transfers a weight of the heavy cards 230 above to the back edge (the edge opposite the gate through which the cards are ejected into the printer 112) of the cards 232 that have fallen past the lifting capability of the lift mechanism 224. The outfeed of the bottom card in the hopper 200 is on the same side as the lift mechanism 224 and the opposite end of the weight of the cards stack 230. The result is reduced weight upon cards 232 being pushed into the printer 112 as compared to prior hoppers.

The improved hopper 200 allows a card printing machine user to use a significantly larger stack of cards, or cards that tend to stick to each other, in the hopper 200 without having to worry about card scratches or reduced motor feed life.

FIG. 3 illustrates, by way of example, a perspective view diagram that illustrates the lifting mechanism 224, the card lifter assembly 220, and the cards 230, 232 with a housing of the improved hopper 200 removed. The view in FIG. 3 shows the lifting mechanism 224 as including two legs 330, 332, a crossbeam 334 mechanically connecting the two legs 330, 332, and the card retainer 226 (illustrated as a first card retainer portion 226A and a second card retainer portion 226B) situated on the crossbeam 334.

The legs 330, 332 can each be curved from a first end 234 to an opposing second end 240. The curvature of the legs 330, 332 is concave from the perspective of the cards 230, 232. The legs 330, 332 can be hollow, so as to make the legs 330, 332 lighter. The legs 330, 332 can be mechanically connected to and situated on opposing ends 338 (other end occluded in the view of FIG. 3) of the crossbeam 334.

The crossbeam 334 mechanically connects the legs 330, 332. The crossbeam 334 provides mechanical support for the card retainer 226A, 226B. The crossbeam 334 includes a width 340 that is greater than a width 342 of the cards 230, 232. The width 340 of the crossbeam 334 separates the legs 330, 332 sufficient distance to let the cards sit between the legs 330, 332 while resting on the card lifter assembly 220.

The card retainer portions 226A, 226B are attached to a top surface of the cross beam 334. The card retainer portions 226A, 226B provide a surface that supports the top cards 230. The card retainer portions 226A, 226B support the weight of the top cards 230 so that the bottom cards 232 do not feel the full weight of the top cards 230. The card retainer portions 226A, 226B as illustrated include a stepped profile. Alternatively, the card retainer portions 226A, 226B can include a curved profile, a triangular profile, bumps, detents, a combination thereof, or the like.

The card pusher assembly 336 includes a surface that can be pushed by a cam and motor. The card pusher assembly 336 when pushed, pushes the card lifter assembly 220 towards the printer 112 and ejects a bottom most card into the printer 112. In travelling to the printer 112, the bottom most card traverses between the legs 330, 332 and through a gate 120.

In pushing the bottom most card into the printer 112, the card lifter assembly 220 causes the lift mechanism 224 to travel up the ramp 222. The ramp 222 as illustrated includes two discreet ramp portions. The discreet ramp portions can be separated by a distance that is greater than a width of the cards of the stack of cards.

The card retainer portions 226A, 226B retain a majority of the weight of the top cards 230 off the bottom cards 232. Removing the majority of the weight reduces an amount of torque required to push the bottom most card into the printer 112. Removing the majority of the weight also reduces an amount of friction between the bottom most card and a surface of the card lifter assembly 220 which the bottom most card touches. Removing the majority of the weight further reduces an amount of friction between the bottom most card and a surface of a card of the bottom cards 232 which the bottom most card touches. The reduction in friction reduces an amount of scratching on the bottom most card.

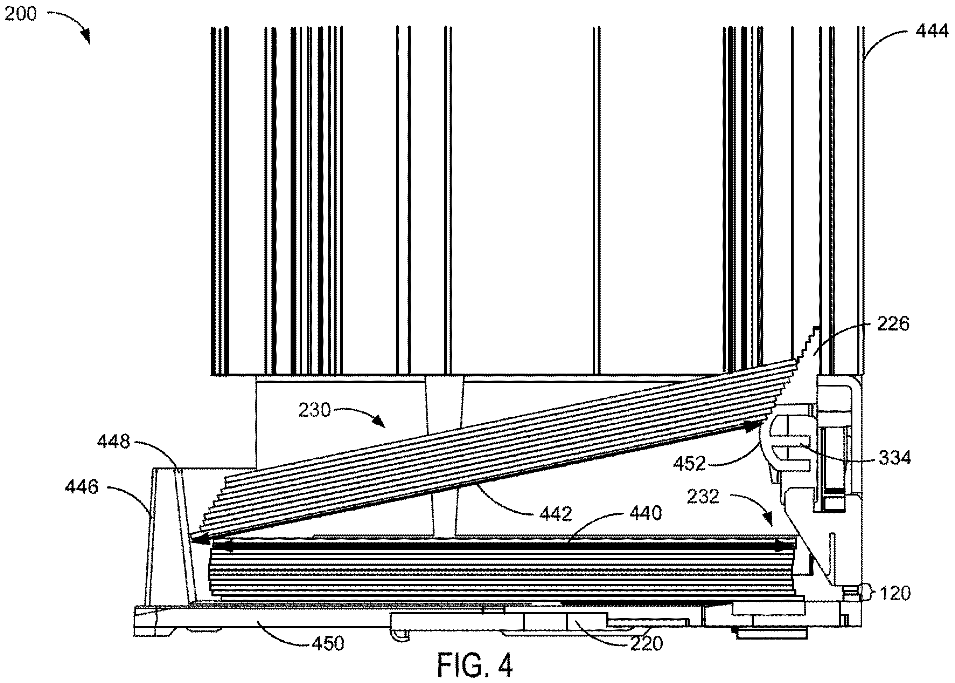

FIG. 4 illustrates, by way of example, a cross-section view diagram of the improved hopper 200. The hopper 200 includes a housing that has opposing sidewalls 444 and 446. The sidewall 444 is the side through which a bottom most card is ejected into the printer 112. The sidewall 446 opposes the sidewall 444.

A backstop 448 is mechanically connected to a base 450 of the hopper 200. The backstop 448 is proximate the sidewall 446. The backstop 448 mechanically supports one or more of the top cards 230. The backstop 448 retains the bottom cards 232 in a position that allows the card lifter assembly 220 to push a bottom most card into the printer 112. If the bottom most card gets too close to the sidewall 446, there will be insufficient space for the card pusher assembly to contact and push the bottom most card into the printer 112.

A length 440 of the cards 230, 232 can be shorter than a distance 442 between a face 452 of the cross beam 334 and the backstop 448. The face 452 of the crossbeam 334 includes a point closest to the sidewall 446. The shorter length allows a card from the top cards 230 to drop below the card retainer 226 and become a member of the bottom cards 232.

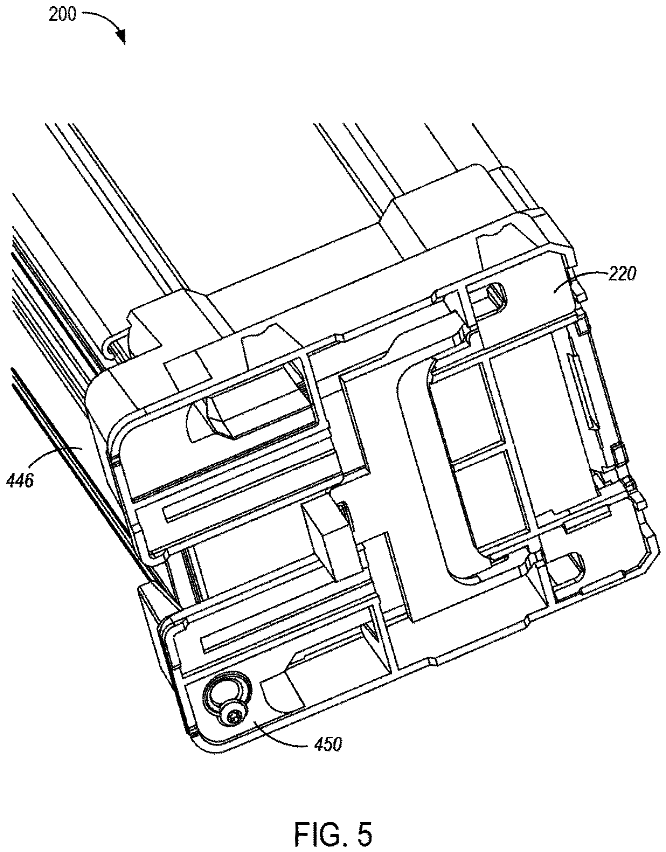

FIG. 5 illustrates, by way of example, a perspective view diagram of an embodiment of the improved hopper 200. The perspective of FIG. 5 is towards the card lifter assembly 220 and the base 450 of the improved hopper 200. The card lifter assembly 220 moves within groves in the base 450 to push the bottom most card into the printer 112.

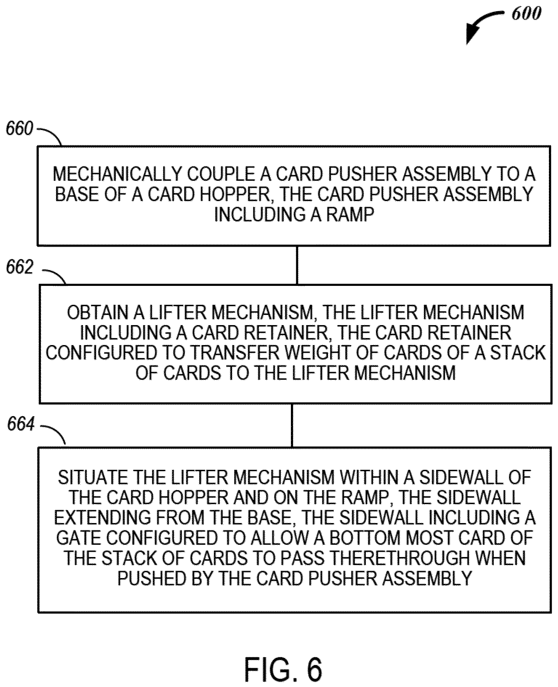

FIG. 6 illustrates, by way of example, a flow diagram of an embodiment of a method 600 of manufacturing the improved hopper 200. The method 600 as illustrated includes mechanically coupling a card lifter assembly to a base of the card hopper, the card lifter assembly including a ramp, at operation 660; obtaining a lifter mechanism, the lifter mechanism including a card retainer, the card retainer configured to transfer weight of cards of a stack of cards to the lifter mechanism, at operation 662; and situating the lifter mechanism within a sidewall of the card hopper and on the ramp, the sidewall extending from the base, the sidewall including a gate configured to allow a bottom most card of the stack of cards to pass therethrough when pushed by a card pusher assembly, at operation 664.

A height of the ramp can extend away from the base and can be greater further from the gate. The lifter mechanism can be situated to push the top cards away from the base as the card pusher assembly is pushed towards the gate. The lifter mechanism can further include two legs mechanically connected by a cross beam. The card retainer can be mechanically connected to the cross beam. The two legs can be convex from a perspective of the gate. The card retainer can include a stepped profile.

The operation 660 can include inserting the card lifter assembly into the base. The base has sides. Plungers on the sides of the base can fall into divots within the hopper to hold it down. However, there are many ways to hold the hopper down on the base.

The operation 662 can include three-dimensional (3D) printing, injection molding, thermoforming, rotational molding, blow molding, compression molding, extrusion, reaction injection molding, vacuum forming, computer numerical control (CNC) machining, a combination thereof, or the like. The operation 662 can include receiving a pre-manufactured lifter mechanism.

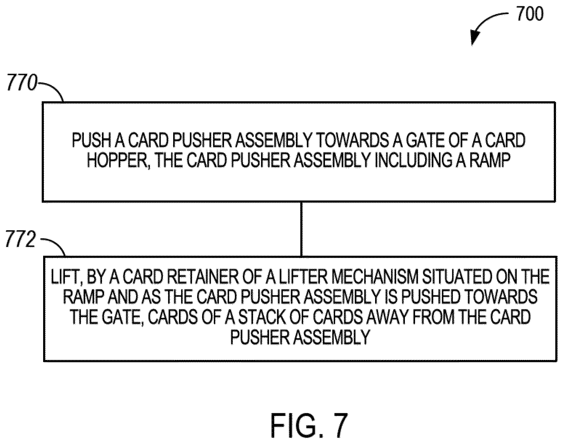

FIG. 7 illustrates, by way of example, a diagram of an embodiment of a method 700 of using the improved hopper 200. The method 700 as illustrated includes pushing a card pusher assembly towards a gate of the card hopper, the card pusher assembly including a ramp, at operation 770; and lifting, by a card retainer portion of a lifter mechanism situated on the ramp and as the card pusher assembly is pushed towards the gate, cards of a stack of cards away from the card pusher assembly, at operation 772.

The lifter mechanism can further include two legs mechanically connected by a cross beam. The card retainer can be mechanically connected to the cross beam. The two legs can be convex from a perspective of the gate. The method 700 can further include transferring, by the card retainer, weight of the top cards to the lifter mechanism. The card retainer can include a stepped profile.

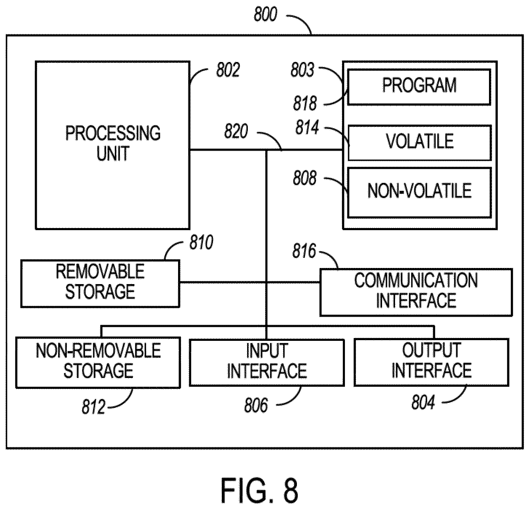

FIG. 8 is a block schematic diagram of a computer system 800 to perform voice inference, and for performing methods and algorithms according to example embodiments. Any of the components or operations of the printer 112, method 600, method 700, or other component or operation can be implemented or facilitated using the system 800 or a component thereof. All components of the system 800 need not be used in various embodiments. For example, the printer 112 can operate using the system 800, manufacturing of the hopper 200 can be facilitated, such as by three-dimensional (3D) printing all or a portion of the hopper 200, using the system 800, or use of the hopper 200 can be facilitated using the system 800 to control a motor or other card feeding mechanism of the hopper 200.

One example computing device in the form of a computer 800 may include a processing unit 802, memory 803, removable storage 810, and non-removable storage 812. Although the example computing device is illustrated and described as computer 800, the computing device may be in different forms in different embodiments. For example, the computing device may instead be a smartphone, a tablet, smartwatch, smart storage device (SSD), or other computing device including the same or similar elements as illustrated and described with regard to FIG. 8. Devices, such as smartphones, tablets, and smartwatches, are generally collectively referred to as mobile devices or user equipment.

Although the various data storage elements are illustrated as part of the computer 800, the storage may also or alternatively include cloud-based storage accessible via a network, such as the Internet or server-based storage. Note also that an SSD may include a processor on which the parser may be run, allowing transfer of parsed, filtered data through I/O channels between the SSD and main memory.

Memory 803 may include volatile memory 814 and non-volatile memory 808. Computer 800 may include - or have access to a computing environment that includes - a variety of computer-readable media, such as volatile memory 814 and non-volatile memory 808, removable storage 810 and non-removable storage 812. Computer storage includes random access memory (RAM), read only memory (ROM), erasable programmable read-only memory (EPROM) or electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions.

Computer 800 may include or have access to a computing environment that includes input interface 806, output interface 804, and a communication interface 816. Output interface 804 may include a display device, such as a touchscreen, that also may serve as an input device. The input interface 806 may include one or more of a touchscreen, touchpad, mouse, keyboard, camera, one or more device-specific buttons, one or more sensors integrated within or coupled via wired or wireless data connections to the computer 800, and other input devices. The computer may operate in a networked environment using a communication connection to connect to one or more remote computers, such as database servers. The remote computer may include a personal computer (PC), server, router, network PC, a peer device or other common data flow network switch, or the like. The communication connection may include a Local Area Network (LAN), a Wide Area Network (WAN), cellular, Wi-Fi, Bluetooth, or other networks. According to one embodiment, the various components of computer 800 are connected with a system bus 820.

Computer-readable instructions stored on a computer-readable medium are executable by the processing unit 802 of the computer 800, such as a program 818. The program 818 in some embodiments comprises software to implement one or more methods described herein. A hard drive, CD-ROM, and RAM are some examples of articles including a non-transitory computer-readable medium such as a storage device. The terms computer-readable medium, machine readable medium, and storage device do not include carrier waves or signals to the extent carrier waves and signals are deemed too transitory. Storage can also include networked storage, such as a storage area network (SAN). Computer program 818 may be used to cause processing unit 802 to perform one or more methods or algorithms described herein.

### Examples and additional notes

Example 1 includes a card hopper comprising a base, sidewalls extending from the base, the sidewalls configured to hold a stack of cards therebetween, a card lifter assembly including a ramp, the card lifter assembly mechanically coupled to the base, a lifter mechanism situated on the ramp, the lifter mechanism including a card retainer, the card retainer configured to transfer weight of cards of a stack of cards to the lifter mechanism, and a gate located in a sidewall of the sidewalls, the gate configured to allow a bottom most card of the stack of cards to pass therethrough when pushed by the card lifter assembly.

In Example 2, Example 1 further includes, wherein a height of the ramp extends away from the base.

In Example 3, at least one of Examples 1-2 further includes, wherein the ramp includes a triangular side profile.

In Example 4, Example 3 further includes, wherein the lifter mechanism is situated to push the top cards away from the base as the card lifter assembly is pushed towards the gate.

In Example 5, at least one of Examples 1-4 further includes, wherein the lifter mechanism further includes two legs mechanically connected by a cross beam.

In Example 6, Example 5 further includes, wherein the cards of the stack of cards include a width less than a width of the cross beam.

In Example 7, at least one of Examples 5-6 further includes, wherein the two legs are convex from a perspective of the gate.

In Example 8, at least one of Examples 5-7 further includes, wherein a width of cards of the stack of cards is less than a distance between the two legs.

In Example 9, at least one of Examples 1-8 further includes, wherein the card retainer includes a stepped profile.

In Example 10, at least one of Examples 1-9 further includes, wherein the card retainer includes a curved profile, a triangular profile, bumps, detents, or a combination thereof.

In Example 11, at least one of Examples 1-10 further includes a backstop extending away from the base, the backstop opposing and situated more than a length of a card of the stack of cards away from the gate.

Example 12 includes a method of making a card hopper comprising mechanically coupling a card lifter assembly to a base of the card hopper, the card lifter assembly including a ramp, obtaining a lifter mechanism, the lifter mechanism including a card retainer, the card retainer configured to transfer weight of cards of a stack of cards to the lifter mechanism, and situating the lifter mechanism within a sidewall of the card hopper and on the ramp, the sidewall extending from the base, the sidewall including a gate configured to allow a bottom most card of the stack of cards to pass therethrough when pushed by the card lifter assembly.

In Example 13, Example 12 further includes, wherein a height of the ramp extends away from the base and is greater further from the gate.

In Example 14, Example 13 further includes, wherein the lifter mechanism is situated to push the top cards away from the base as the card lifter assembly is pushed towards the gate.

In Example 15, at least one of Examples 12-14 further includes, wherein the lifter mechanism further includes two legs mechanically connected by a cross beam, and the cards of the stack of cards include a width less than a width of the cross beam.

In Example 16, Example 15 further includes, wherein the two legs are convex from a perspective of the gate.

In Example 17, at least one of Examples 12-16 further includes, wherein the card retainer includes a stepped profile.

Example 18 includes a method of using a card hopper, the method comprising pushing a card lifter assembly towards a gate of the card hopper, the card lifter assembly including a ramp, and lifting, by a card retainer of a lifter mechanism situated on the ramp and as the card lifter assembly is pushed towards the gate, cards of a stack of cards away from the card lifter assembly.

In Example 19, Example 18 further includes, wherein the lifter mechanism further includes two legs mechanically connected by a cross beam, the card retainer is mechanically connected to the cross beam, and the two legs are convex from a perspective of the gate.

In Example 20, Example 19 further includes transferring, by the card retainer, weight of the cards to the lifter mechanism, wherein the card retainer includes a stepped profile.

The functions or algorithms described herein may be implemented in software in one embodiment. The software may consist of computer executable instructions stored on computer readable media or computer readable storage device such as one or more non-transitory memories or other type of hardware-based storage devices, either local or networked. Further, such functions correspond to modules, which may be software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system, turning such computer system into a specifically programmed machine. Thus, a module can include software, hardware that executes the software or is configured to implement a function without software, firmware, or a combination thereof.

The functionality can be configured to perform an operation using, for instance, software, hardware, firmware, or the like. For example, the phrase "configured to" can refer to a logic circuit structure of a hardware element that is to implement the associated functionality. The phrase "configured to" can also refer to a logic circuit structure of a hardware element that is to implement the coding design of associated functionality of firmware or software. The term "module" refers to a structural element that can be implemented using any suitable hardware (e.g., a processor, among others), software (e.g., an application, among others), firmware, or any combination of hardware, software, and firmware. The term, "logic" encompasses any functionality for performing a task. For instance, each operation illustrated in the flowcharts corresponds to logic for performing that operation. An operation can be performed using, software, hardware, firmware, or the like. The terms, "component," "system," and the like may refer to computer-related entities, hardware, and software in execution, firmware, or combination thereof. A component may be a process running on a processor, an object, an executable, a program, a function, a subroutine, a computer, or a combination of software and hardware. The term, "processor," may refer to a hardware component, such as a processing unit of a computer system.

Furthermore, the claimed subject matter may be implemented as a method, apparatus, or article of manufacture using standard programming and engineering techniques to produce software, firmware, hardware, or any combination thereof to control a computing device to implement the disclosed subject matter. The term, "article of manufacture," as used herein is intended to encompass a computer program accessible from any computer-readable storage device or media. Computer-readable storage media can include, but are not limited to, magnetic storage devices, e.g., hard disk, floppy disk, magnetic strips, optical disk, compact disk (CD), digital versatile disk (DVD), smart cards, flash memory devices, among others. In contrast, computer-readable media, i.e., not storage media, may additionally include communication media such as transmission media for wireless signals and the like.

Although a few embodiments have been described in detail above, other modifications are possible. For example, the logic flows depicted in the figures do not require the particular order shown, or sequential order, to achieve desirable results. Other steps may be provided, or steps may be eliminated, from the described flows, and other components may be added to, or removed from, the described systems. Other embodiments may be within the scope of the following claims.

## Claims

1. A card hopper comprising:
a base;
sidewalls extending from the base, the sidewalls configured to hold a stack of cards therebetween;
a card lifter assembly including a ramp, the card lifter assembly mechanically coupled to the base;
a lifter mechanism situated on the ramp, the lifter mechanism including a card retainer, the card retainer configured to transfer weight of cards of a stack of cards to the lifter mechanism; and
a gate located in a sidewall of the sidewalls, the gate configured to allow a bottom most card of the stack of cards to pass therethrough when pushed by a card pusher assembly.

2. The card hopper of claim 1, wherein a height of the ramp extends away from the base.

3. The card hopper of claim 1 or 2, wherein the ramp includes a triangular side profile;
wherein, optionally, the lifter mechanism is situated to push the cards away from the base as the card lifter assembly is pushed towards the gate.

4. The card hopper of any of the proceeding claims, wherein the lifter mechanism further includes two legs mechanically connected by a cross beam;
wherein, optionally, the cards of the stack of cards include a width less than a width of the cross beam; and/or
wherein, optionally, the two legs are convex from a perspective of the gate; and/or
wherein, optionally, a width of cards of the stack of cards is less than a distance between the two legs.

5. The card hopper of any of the proceeding claims, wherein the card retainer includes a stepped profile.

6. The card hopper of any of the proceeding claims, wherein the card retainer includes a curved profile, a triangular profile, bumps, detents, or a combination thereof.

7. The card hopper of any of the proceeding claims, further comprising a backstop extending away from the base, the backstop opposing and situated more than a length of a card of the stack of cards away from the gate.

8. A method of making a card hopper comprising:
mechanically coupling a card lifter assembly to a base of the card hopper, the card lifter assembly including a ramp;
obtaining a lifter mechanism, the lifter mechanism including a card retainer, the card retainer configured to transfer weight of cards of a stack of cards to the lifter mechanism; and
situating the lifter mechanism within a sidewall of the card hopper and on the ramp, the sidewall extending from the base, the sidewall including a gate configured to allow a bottom most card of the stack of cards to pass therethrough when pushed by a card pusher assembly.

9. The method of claim 8, wherein a height of the ramp extends away from the base and is greater further from the gate;
wherein, optionally, the lifter mechanism is situated to push the cards away from the base as the card lifter assembly is pushed towards the gate.

10. The method of claim 8 or 9, wherein:
the lifter mechanism further includes two legs mechanically connected by a cross beam; and
the cards of the stack of cards include a width less than a width of the cross beam.

11. The method of claim 10, wherein the two legs are convex from a perspective of the gate.

12. The method of any of claims 8 to 11, wherein the card retainer includes a stepped profile.

13. A method of using a card hopper, the method comprising:
pushing a card lifter assembly towards a gate of the card hopper, the card lifter assembly including a ramp; and
lifting, by a card retainer of a lifter mechanism situated on the ramp and as the card lifter assembly is pushed towards the gate, cards of a stack of cards away from the card lifter assembly.

14. The method of claim 13, wherein:
the lifter mechanism further includes two legs mechanically connected by a cross beam;
the card retainer is mechanically connected to the cross beam; and
the two legs are convex from a perspective of the gate.

15. The method of claim 14, further comprising transferring, by the card retainer, weight of the cards to the lifter mechanism, wherein the card retainer includes a stepped profile.
